# EUROPEAN PATENT APPLICATION

(11) **EP 1 927 514 A1**
(43) Date of publication of application: **04.06.2008**
(21) Application number: 06024797.0
(22) Date of filing: 30.11.2006
(51) Int. Cl.: B60R 19/24

(54) **High speed crash energy absorber**

(71) Applicant: Rieter Technologies AG, 8406 Winterthur (CH)
(72) Inventor: Köse, Selamet, 8053 Zürich (CH); Lehmann, Dirk, 8525 Niederneunform (CH); Kuhnert, Sebastian, 9475 Sevelen (CH); Semeniuk, Brad P., 8700 Küsnacht (CH)
(74) Representative: Alder, Hans Rudi

(57) **Abstract**

High speed crash energy absorber (10) featuring a beam (11) having a frustum of pyramid like shape and comprising a plurality of strengthening ribs (12,13) crossing each other and generating a plurality of cup like chambers (14). This absorber (10) comprises a continuous increase of stiffness from its front end (F) to its basis (B) and may be integrated within a engine under shield (2).

## Description

Present invention is concerned with a high speed crash energy absorber **according to the preamble of claim 1.**

Safety arrangements for use in motor vehicles are well known in the art and comprise in general low energy and high energy absorbers. Present invention is not concerned with low energy absorbers for bumpers, such as deformable bumpers or resilient support structures as described in US-5'269'574, GB-2'422'645 or EP-0'894'676. Such low energy absorbers, also known as shock absorbers are able to absorb the kinetic energy of vehicles moving with a velocity below 35 km/h.

Present invention is concerned with high energy absorbers, also known as crash absorbers, which are able to protect the passengers of a motor vehicle moving with a velocity of about 65 km/h. Such a crash absorbers are usually incorporated in the vehicle's longitudinal chassis beams, as disclosed in US-6'695'393, DE-199'52'536 or DE-196'00'933 and allow to absorb a large amount of kinetic energy without deformation of the passenger compartment. In order to simplify the vehicle's structure it is known from EP-0'847'912 to integrate crash absorbers into the engine under shield. This construction protects the engine compartment on one hand and stabilises the high energy absorbing beams on the other hand. Due to the U-shaped and integrated beams this construction is able to absorb energy in the amount of about 10 kJ (corresponding to a the kinetic energy of a vehicle moving with a velocity of about 56 km/h) without damaging the passenger compartment. Nevertheless during deformation of the vehicle's longitudinal chassis beams the deceleration of the vehicle may achieve values in the amount of more than 44g (i.e. 44 times the negative acceleration of gravity).

It is therefore the intention of the modern car industry to reduce the maximum deceleration values without reducing the energy absorption capability of the crash absorber. In order to avoid such deceleration peaks crashboxes such as disclosed in EP-1'477'371, DE-10'2004'028'000 or DE-10'2005'021'663 have been proposed. These crash boxes or similar devices as disclosed in DE-100'31'370 are interposed between the lateral bumper's support structure and the longitudinal chassis beam and are designed to keep the energy absorption at a constant level during the whole deformation process time. These crash boxes are increasing the deformation path and reduce the likeliness of irreversible deformations of the longitudinal chassis beam. Nevertheless these crash boxes collapse already at impact forces of about 100 kN and are not suitable for high speed crash energy absorption.

It is therefore the object of present invention to create a high speed crash energy absorber with which the maximum deceleration values are substantially decreased, for instance from about 44g to about 36g (i.e. about 20%).

It is a further object of present invention to create a light weight high speed crash energy absorber which is easy to manufacture, integrable in an engine under shield and easy to be mounted and replaced (cost savings).

These objects are achieved by a high speed crash energy absorber comprising the features of claim 1 and in particular by a high speed crash energy absorber featuring a beam having a frustum of pyramid like shape comprising a plurality of strengthening ribs crossing each other and generating a plurality of cup like chambers. This absorber comprises a continuous increase of stiffness from its front end to its basis. This is essential for the decreasing of the maximum deceleration values occurring during a crash situation.

This absorber is preferably made of a reinforced thermoplastic material, but could also be made of a thermoset material or even a metallic foam. Preferably the absorber consists of an extruded LFT material and may comprise glass, aramid or polyamid fibres material. Of course the crash absorber may also consist of a thermoset material.

In a preferred embodiment the crash absorber is integrated into an engine under shield and in particular consists of the same material. It is of course advantageous and cost saving to manufacture such an integrated crash absorber comprising an engine under shield by the same extrusion process.

In a further development of present crash absorber the cup like chambers are used for acoustic improvements of the engine compartment. In particular the cup like chambers of the beam comprise acoustical effective material, in particular sound absorbing foam or fibrous material. It is within the normal technical knowledge of the man skilled in the art to cover the openings of the cup like chambers by a thin foil or any other suitable element in order to avoid any soiling or contamination of these chambers. It is a further option of this crash absorber to insert openings in the bottom of the cup like chambers in order to let leak condensed water or to mount the beams upside down, i.e. to orient the openings of the cup like chambers towards the ground.

A preferred embodiment of a high speed crash energy absorber according to the present invention will be described below in more detail and with reference to the following figures, whereby
Fig.1: shows a schematic view of an engine compartment of a motor vehicle with engine under shield;
Fig.2: shows a schematic cross sectional view of a principal design of the high speed crash absorber in accordance with the invention;
Fig.3: shows a schematic longitudinal section through a preferred design of the absorber in accordance with the invention;
Fig.4: shows a schematic cross section through of a preferred design of the absorber in accordance with the invention.

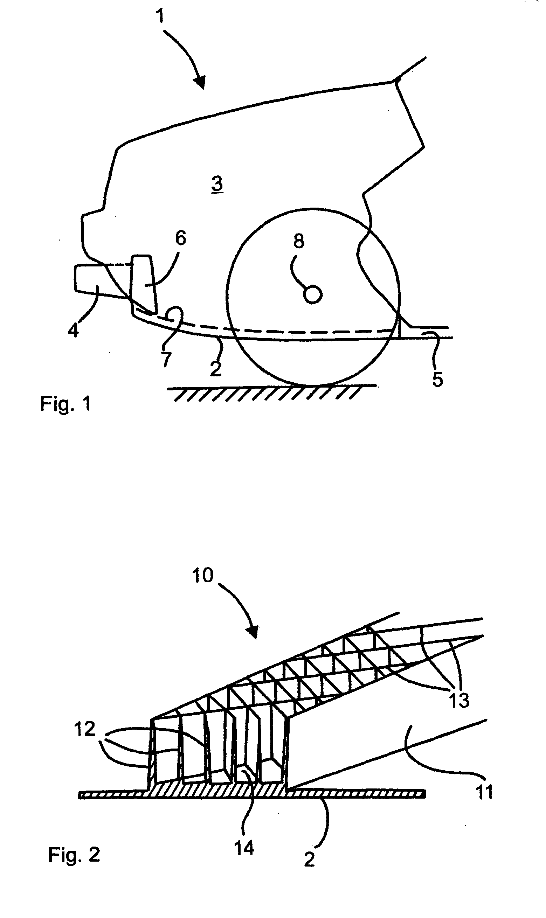

As shown in Fig.1, modern automotive vehicles 1 comprise an engine under shield 2 which covers the road side of the engine compartment 3. This engine under shield 2 is at its front side connected to a lateral support 6 of a bumper 4 and at its rear side affixed on a longitudinally rail 5. This under shield 2 comprises reinforcing seams and/or beads 7 for its to stabilisation. The lateral support 6 is carried by additional longitudinal rails (not shown) which have to go round the axel 8 of the front wheel.

The schematic arrangement in Fig.2 shows a high speed crash energy absorber 10 in accordance with the invention. This crash absorber 10 comprises a beam 11 having a frustum of pyramid like shape, i.e. has smaller cross sectional dimensions on its front side than on its rear side and is comprising a plurality of strengthening ribs 12, 13, which are crossing each other and generating a plurality of cup like chambers 14. It is essential for the invention that this absorber 11 comprises a continuous increase of stiffness from its front end F to its basis B. This solved by the frustum of pyramid like shape of the beam 11, but could be solved by increasing thickness of the ribs 12, 13 or other suitable measurements. The shown embodiment of the beam 11 is integrally formed with an engine under shield 2 and consists of an extruded long fibres thermoplastic material (e-LFT). It is understood that the man skilled in the art considers to use glass, aramid, polyamid or similar fibres to strengthen the crash absorber.

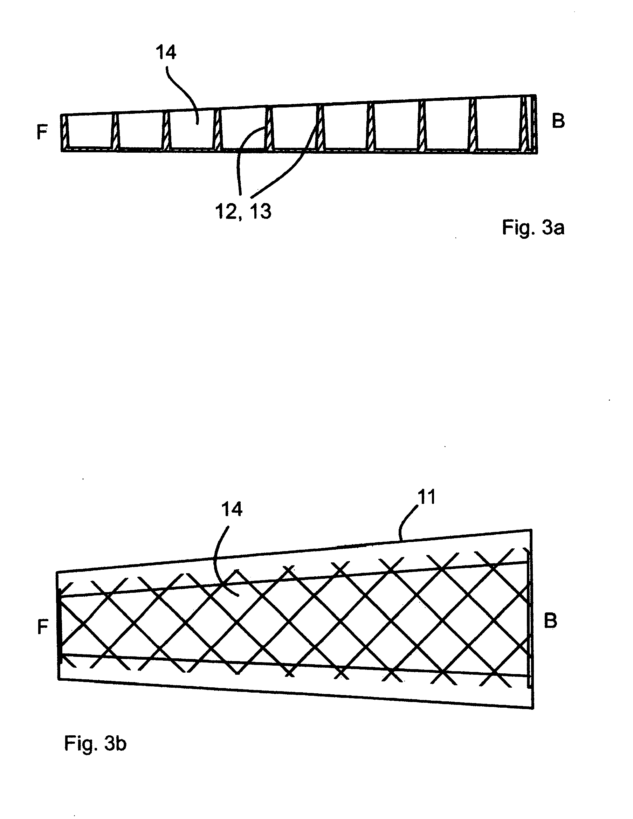

Fig.3a, 3b show schematically cross sectional views of a preferred design of the beam 11 of the crash absorber 10 in accordance with the invention. The basis B of the beam 11 having a frustum of pyramid like shape has a width of about 250 mm and a height of about 80 mm, while the front end F of the beam 11 having a frustum of pyramid like shape has a width of about 150 mm and a height of about 50 mm. In order to adjust the behaviour of the energy loss of the beam 11 in an simple way the strengthening ribs 12, 13 are tapered and have a wall thickness of about 3 - 5 mm. In the preferred embodiment these ribs 12,13 have a distance from each other of about 47 mm. The total length of the shown beam 11 having a frustum of pyramid like shape is about 660 mm.

The advantages of present invention are obvious for the man skilled in the art. In particular the simplicity of the above described absorber combining a particular shape and structure of the beam as well as the proposed material lead to an efficient reduction of the maximum deceleration values. The combination and unifying of this crash absorber with the engine under shield generates even better mechanical strength, aerodynamic improvements and cost savings. The possibility to manufacture the high speed crash absorber by impact extrusion and to integrate its beam into an engine under shield is obviously an enormous advantage in view of the present state of the art.

Present invention is not limited to the specific embodiment described herewith. Further modifications of the above embodiment will be obvious for the man skilled in the art. It will be obvious to use the cup like chambers 14 for acoustic improvements, in particular by filling these chambers 14 with sound absorbing materials or to cover these chambers with a thin foil in order to protect the sound absorbing material or in order to use the chambers 14 as Helmholtz resonators. The necessary openings therefore being within the beam or within the foil. These chambers 14 may also be used to support, protect or house any other suitable devices or materials, such as cables, sensors or further energy absorbing materials.

## Claims

**1.** High speed crash energy absorber (10) featuring a beam (11) which has a frustum of pyramid like shape and comprises a plurality of strengthening ribs (12,13) crossing each other and generating a plurality of cup like chambers (14), which absorber (10) comprises a continuous increase of stiffness from its front end (F) to its basis (B).

**2.** Crash absorber in (10) in accordance with claim 1, **characterised in that** the beam (11) consists of a fibres reinforced thermoplastic material.

**3.** Crash absorber (10) in accordance with claim 2, **characterised in that** the beam (11) consists of an extruded LFT material.

**4.** Crash absorber (10) in accordance with claim 3, **characterised in that** the beam (11) comprises glass, aramid or polyamid fibres material.

**6.** Crash absorber (10) in accordance with claim 1, **characterised in that** the beam (11) consists of a thermoset material.

**7.** Crash absorber (10) in accordance with one of the preceding claims, **characterised in that** the beam (11) is integrated into an engine under shield (2).

**8.** Crash absorber (10) in accordance with claim 7, **characterised in that** the beam (11) and the engine under shield (2) consist of the same material.

**9.** Crash absorber (10) in accordance with claim 1, **characterised in that** the cup like chambers (14) of the beam (11) comprise acoustical effective material, in particular sound absorbing foam or fibrous material.

**10.** Crash absorber (10) in accordance with one of the preceding claims, **characterised in that** the crash absorber (10) is extruded, in particular made by impact extrusion.
